# EUROPÄISCHE PATENTSCHRIFT

(11) **EP 0 386 294 B1**
(45) Veröffentlichungstag und Bekanntmachung des Hinweises auf die Patenterteilung: **15.12.1993**
(21) Anmeldenummer: 89104171.7
(22) Anmeldetag: 09.03.1989
(51) Int. Cl.: B23B 31/16

(54) **Kraftbetätigte Zentrierspanneinheit**
Motorized centering and clamping device
Dispositif de centrage et serrage motorisé

(43) Veröffentlichungstag der Anmeldung: 12.09.1990
(73) Patentinhaber: Fischer, David, D-63743 Aschaffenburg (DE); Kohlert, Rudolf, D-63811 Stockstadt (DE)
(72) Erfinder: Fischer, David, D-63743 Aschaffenburg (DE); Kohlert, Rudolf, D-63811 Stockstadt (DE)
(74) Vertreter: Bischof, Hans-Jochen, Dipl.-Ing.

(56) Entgegenhaltungen:
- FR-A- 390 125
- FR-A- 2 313 166
- FR-E- 10 279
- US-A- 3 589 741

## Beschreibung

Die Erfindung bezieht sich auf eine Zentrierspanneinheit mit zentrierbaren Spannbacken zum Einspannen von zu bearbeitenden Werkstücken, wobei die Spannbacken gegenläufig bewegt werden mittels eines Drehbolzens, an dem eine Kraft über von einem Medium angetriebenen Kolben angreift, und der Drehbolzen mit Stiften versehen ist, die in den Spannbacken gelagert sind.

Zentrierspanneinheiten, die mit einem Drehbolzen zusammenarbeiten, sind bekannt. So ist in der US Patentschrift 3,589,741 eine Vorrichtung beschrieben, die sich auf eine Spannvorrichtung bezieht mit einer Vielzahl von beweglichen Spannbacken zum Einspannen eines zu bearbeitenden Werkstückes. Die Spannbacken werden linear bewegt, wobei die Spannbacken weitestgehend spielfrei angeordnet sind. Der Antrieb der Spannbacken erfolgt über einen Drehbolzen, der von Kolben bewegt wird. Durch die Drehung des Drehbolzens wird eine Bewegung auf die Spannbacken übertragen durch Stifte, die in den Spannbacken gelagert sind. Der Drehbolzen seinerseits wird von vier Kolben bewegt, von denen jeweils zwei gegenüberliegend gleichzeitig beaufschlagt werden.

Spannvorrichtungen dieser Art werden meist dort eingesetzt, wo kleine Bauweisen erforderlich sind. Es ist also erforderlich, solche Spanneinrichtungen so klein wie möglich zu halten. Die vorliegende Erfindung hat sich somit zur Aufgabe gemacht, eine kraftbetätigte Zentrierspanneinheit zu schaffen, die eine kleine Bauweise zuläßt und die nur einen oder zwei Kolben zum Antrieb benötigt, wobei der Angriffspunkt der Kolben in einen Bereich verlagert wird, bei dem keine Biegemomente auftreten.

Die Erfindung löst diese Aufgabe mit einer Zentrierspanneinheit nach Anspruch 1.

Die Vorteile, die sich durch die Erfindung ergeben, bestehen darin, daß eine niedrige Bauhöhe vorgesehen werden kann, daß die Lage der Zentrierspannschieber auf der Stirnseite eines bewegungsumsetzenden Drehkolbens sowie die direkte Antriebskolbenlage am Drehkolben eine niedere Bauhöhe ermöglicht, ohne daß die Anordnung selbst dafür in die Breite gehen muß. Gerade für den Einsatz einer solchen Einrichtung bei NC-Maschinen ist dieses wichtig. Darüber hinaus ergibt sich ein einfacher und robuster Aufbau. Die Erfindung kommt mit wenigen einfachen und kostengünstigen Teilen aus. Im wesentlichen wird ein Drehkolben, ein Gehäuse, ein Antriebskolben, ein Zentrierspanner mit Kulissenbolzen benötigt.

Die kompakt gedrängte Bauweise ergibt sich dadurch, daß die Antriebsart der Zentrierschieber über die gesamte Gehäusebreite führbar ist. Dadurch ergibt sich auch eine Führungslänge, die speziell für den Einsatz wichtig ist, wenn Aufsatzbacken Verwendung finden. Da diese Bauweise einen großen Hub zuläßt, ergibt sich damit auch eine große Kraft. Durch die Übertragung mittels eines Drehbolzens beträgt das Wegverhältnis zwischen Antrieb und Abtrieb im Normalfall 1 : 1, womit ein großer Spannhub zustande kommt.

Diese Aufbauweise läßt auch ein Baukastensystem zu, in dem unterschiedliche Höhen und Anordnungen berücksichtigt werden können. Die Umsetzung der Antriebskolbenlängsbewegung in die drehende des Drehbolzens ermöglicht es, auf diese Drehbolzen beispielsweise variable Verlängerungsaufsätze oder solche mit anderen Zentrierspannschieberanordnungen anzubringen, ohne daß das gesamte Futter ausgetauscht werden müßte. Zudem kann sogar mit Hilfe des gleichen Drehbolzens schon für unterschiedliche Kulissenbolzenaufnahmen und damit Zentrierschieberanordnungen eine Ausbildung gewählt werden.

Das erfindungsgemäße Prinzip ermöglicht es darüber hinaus, mit wenigen Zusatzausbildungen auch eine schwimmende, das heißt sich an eine bestimmte Werkstücklage anpassende Spannung zu erzielen. Dazu muß beispielsweise nur der Drehbolzen verschiebbar aufgeteilt sein und eine einfache Abklemmvorrichtung eingebaut werden.

Anhand der Zeichnungen seien nun Ausführungs- und Ausgestaltungsbeispiele der Erfindung beschrieben.
Es zeigen
Fig.1:
   Eine erfindungsgemäße Einheit mit zwei tangentialen Zentrierspannschiebern
   a) im Längsschnitt,
   b) im Schnitt von oben betrachtet,
   c) in Draufsicht;
Fig.2:
   Eine Einheit mit zwei radialen Zentrierspannschiebern
   a) im Längsschnitt,
   b) im Schnitt von oben betrachtet,
   c) in Draufsicht;
Fig.3:
   Eine Einheit mit drei radialen Zentrierspannschiebern;
Fig.4:
   Eine Einheit mit Zusatzausbildung zur schwimmenden Spannung
   a) im Längsschnitt,
   b) im Schnitt von oben betrachtet.

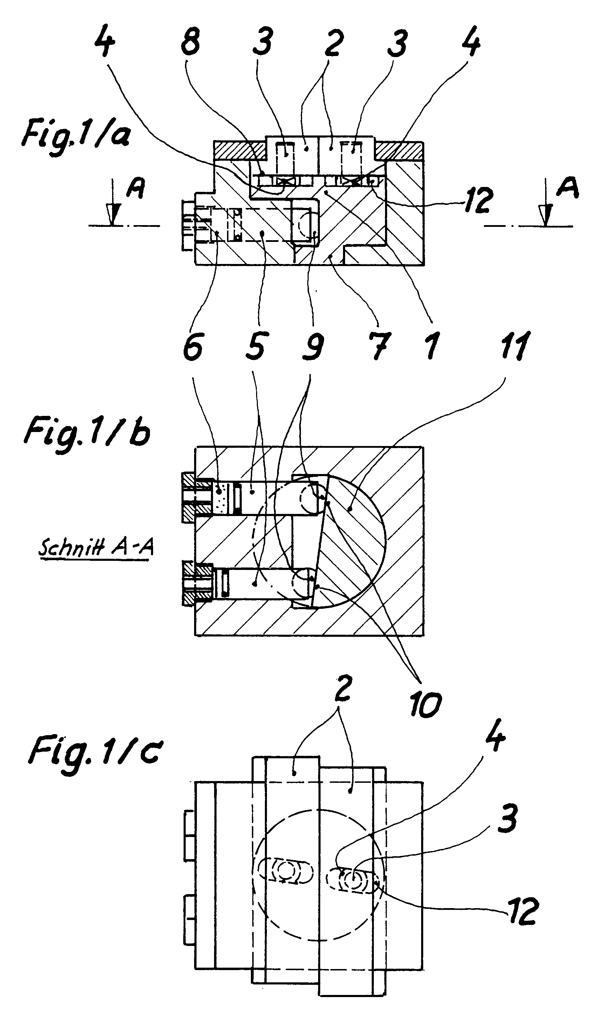

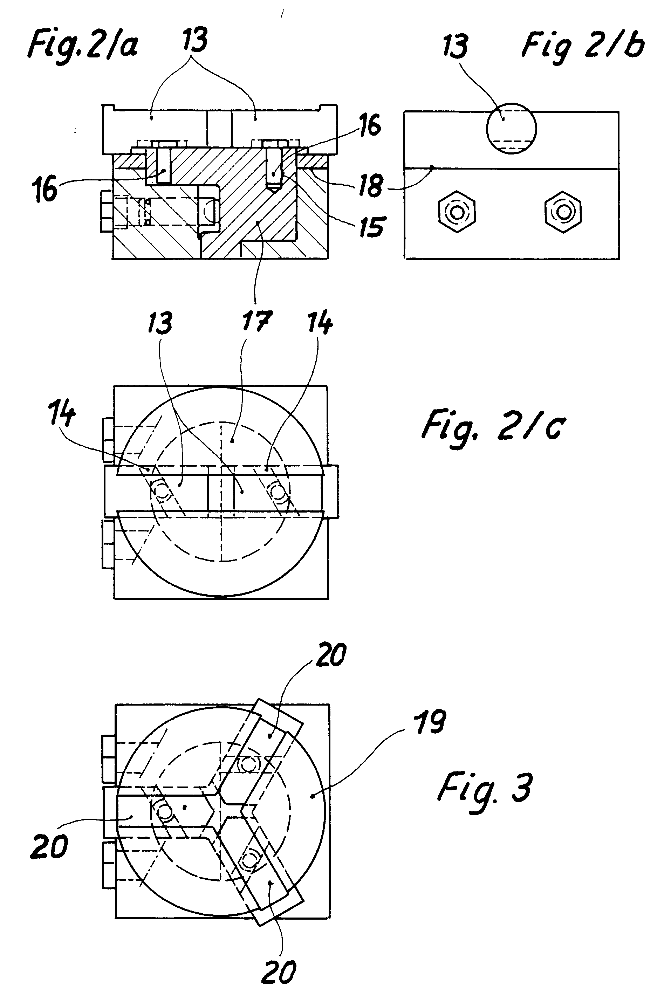

In Fig.1 sitzen auf der Stirnseite eines Drehkolbens(1) zwei gegenläufige, tangential bewegte Zentrierspannschieber(2). Durch diese Anordnung sind sie platzsparend und sicher geführt.
Als Mitnahmeelemente dienen zwei Kulissenbolzen(3/4) mit rundem(3) und abgeflachten(4) Teil.
Der Drehkolben(1) wird von zwei direkt an ihm liegenden hydraulischen Antriebskolben(5) abwechselnd bewegt, in deren Ölräume(6) dazu abwechselnd Öl gepresst wird.
Der Drehkolben(1) ist in dem Bereich zwischen den Zentrierspannschiebern(2) und den Antriebskolben(5) gelagert, und am hier unteren Ende zusätzlich durch einen Zapfen(7). Um eine besonders gedrängte Bauweise zu erreichen, tauchen die nebeneinanderliegenden Antriebskolben(5) zusammen mit ihren Gehäuseführungen in den Drehkolben ein.
Die Angriffsstelle der Antriebskolben auf den Drehkolben ist mit vorteilhafter Flächenberührung folgendermaßen ausgeführt: abgeflachte Kugeln(9) in den Antriebskolben stoßen auf Flächen(10) des hier auf Halbkreisquerschnitt(11) reduzierten Drehkolbens.
Die Kulissenbolzen(3/4) sitzen hier in Bohrungen(3) der Zentrierspannschieber(2) und greifen in Nuten(12) des Drehkolbens ein. Dies ermöglicht die geringste Bauhöhe.
Die Nuten(12) verlaufen in Mittelstellung quer zu parallel aneinanderliegenden Zentrierspannschiebern(2), die so über die gesamte Gehäuselänge geführt sind. In Fig.2 bestehen die radialen Zentrierspannschieber(13) aus baulich sehr einfachen, abgeflachten Rundbolzen.
Die radiale Zweieranordnung ist für bestimmte Fälle gedacht, bei denen auf eine lange Führung zugunsten der Lage auf einer Achse verzichtet werden will.
Hier sind die Nuten(14) in die Zentrierspannschieber(13) eingebracht, während sich die Bohrungen(15) für die Kulissenbolzen(16) im Drehkolben(17) befinden. Diese Ausbildung benötigt etwas mehr Bauhöhe als die in Fig.1, baut jedoch etwas einfacher und robuster.
Wegen des radialen Sitzes der Zentrierspannschieber(13) besitzen die Nuten(14) einen schrägen Verlauf.
Die Gehäuseteilung(18) ermöglicht es, das Oberteil der Einheit gegen höhere mit entsprechender Drehkolbenverlängerung, oder gegen solche mit anderen Zentrierspannschieberanordnungen (wie etwa in Fig.3) auszutauschen. Durch die Übertragung mittels des Drehkolbens entstehen so auch bei hohen Oberteilen keinerlei Wirkungsgradverluste.

In Fig.3 befindet sich auf der Grundeinheit aus Fig.2 ein ausgetauschter Aufsatz(19) für drei Radialschieber(20). Ebenso können z.B. Viereranordnungen angewandt werden.

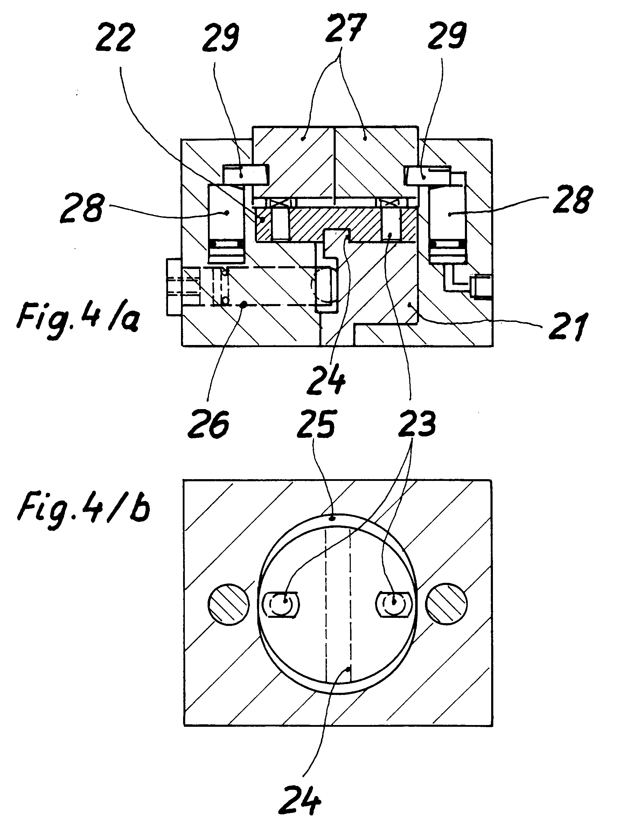

Um eine schwimmende Spannung zu ermöglichen, ist in Fig.4 der Drehkolben(21/22) quergeteilt, wobei das obere Teil(22), das die Kulissenbolzen(23) aufnimmt, über eine Nutenverzahnung(24) verschiebbar ist. Hierfür besteht ein länglicher Freiraum(25).
Wenn nun der Drehkolben durch die Antriebskolben(26) in Bewegung versetzt wird, fahren beide Zentrierspannschieber(27) heraus, bis einer an die schon bestimmte Werkstücklage anstößt. In diesem Moment fängt das obere Drehkolbenteil(22) unter weiterer Drehung an, sich zu verschieben, und zwar bis auch der zweite Zentrierspannschieber an das Werkstück anstößt. Nun entwickeln beide Zentrierspannschieber die Spannkraft, und werden darauf abgeklemmt.
Dies geschieht über kleine Kolben(28), die leicht kippbar gelagerte Führungsleisten(29) verpressen, und zwar entgegen eines späteren Bearbeitungsdruckes.

## Patentansprüche

1. Zentrierspanneinheit mit zentrierbaren Spannbacken (2) zum Einspannen von zu bearbeitenden Werkstücken, wobei die Spannbacken (2) gegenläufig bewegt werden mittels eines Drehbolzens (1), an dem eine Kraft über von einem Medium angetriebenen Kolben (3,4) angreift und der Drehbolzen (1) mit Stiften versehen ist, die in den Spannbacken (2) gelagert sind, wobei der Drehbolzen (1) am Umfang eine Aussparung (10) besitzt, in die tangential wirkende Antriebskolben (5) eingreifen, so daß eine abwechselnde Drehung des Drehbolzens (1) erzielbar ist und der Drehbolzen (1) in dem Bereich zwischen der Antriebskolbenangriffsstelle (10) und den Zentrierspannschiebern gelagert ist und eine zweite Lagerung auf dem den Zentrierspannschiebern (2) entgegengesetzten Ende in Form eines Zapfens vorgesehen ist, wobei an der Stirnseite des Drehbolzens (1) radial oder tangential zwei oder mehr gegenläufige Zentrierspannschieber (2) angeordnet sind und die Bewegungsübertragung vom Drehbolzen zu den Zentrierspannschiebern (2) über in Nuten (12) greifende Kulissenbolzen (3,4) erfolgt und daß zwei abwechselnd wirkende Antriebskolben (5) nebeneinander angeordnet in den durch die Drehbolzenlänge und den größten Drehbolzendurchmesser bestimmenden Raum eintauchen.

2. Zentrierspanneinheit nach Anspruch 1, **dadurch gekennzeichnet**,
- daß in die beiden Antriebskolben abgeflachte Kugeln (9) eingelassen sind, die innerhalb der Aussparung (10) im Drehbolzen mit ihren Abflachungen auf den Drehbolzen stoßen.

3. Zentrierspanneinheit nach Anspruch 1 und 2, **dadurch gekennzeichnet**,
- daß die Kulissenbolzen (3,4) in Bohrungen der Zentrierspannschieber (2) angeordnet sind und mit abgeflachten Kopfabschnitten in Nuten des Drehbolzens eingreifen.

4. Zentrierspanneinheit nach den Ansprüchen 1 und 2, **dadurch gekennzeichnet**,
- daß die Kulissenbolzen (3,4) in Bohrungen des Drehbolzens (1) eingelassen sind und mit abgeflachten Kopfabschnitten in Nuten der Zentrierspannschieber (2) eingreifen.

5. Zentrierspanneinheit nach Anspruch 1 bis 4, **dadurch gekennzeichnet**,
- daß zwei Zentrierspannschieber (2,13,27) parallel aneinander anliegend vorgesehen sind, deren Nuten in bezug auf die Mittelstellung zur Bewegungsrichtung der Zentrierspannschieber verlaufen.

6. Zentrierspanneinheit nach den Ansprüchen 1 bis 4, **dadurch gekennzeichnet**,
- daß die Zentrierspannschieber (2,13,27) in bezug auf den Drehbolzen (1) radial angeordnet sind und ihre Nuten bezogen auf die Mittelstellung schräg zur Bewegungsrichtung der Zentrierspannschieber verlaufen.

7. Zentrierspanneinheit nach Anspruch 1 bis 6, **dadurch gekennzeichnet**,
- daß der Drehbolzen (1) im Bereich zwischen Antriebskolben (5,17) und Zentrierspannschiebern quergeteilt ist,
- daß die beiden Teile des Zentrierspannschiebers mit Nuten verzahnt sind und
- daß der Teil, auf dem sich der Zentrierspannschieber befindet, in einen Freiraum verschiebbar ist.

8. Zentrierspanneinheit nach den Ansprüchen 1 bis 7, **dadurch gekennzeichnet**,
- daß eine Abklemmvorrichtung vorgesehen ist in Form einer in das Gehäuse eingeschobenen Leiste, die zur Führung der Zentrierspannschieber in Nuten dient, und die um ihre Längsachse leicht kippbar gelagert ist und die bei Druckbeaufschlagung der Kolben die Zentrierspannschieber mit dem Gehäuse in Richtung auf den Drehbolzen zu verspannt.

## Claims

1. Centring clamping device having centrable chuck jaws (2) for clamping workpieces to be machined, wherein said chuck jaws (2) are moved in opposition to each other by means of a gudgeon (1) at which a force is applied through a piston (3, 4) operated by means of a medium, and wherein said gudgeon (1) is provided with pins supported in said chuck jaws (2), with said gudgeon (1) being provided with a peripheral recess (10) for the engagement of tangentially operative driving pistons (5) so as to produce an alternating rotation of said gudgeon (1) and to support said gudgeon (1) in the area between the point of application (10) of said driving piston and the centring clamping slides, while a second support is provided in the form of a pivot on the end opposite to said centring clamping slides (2), with two or more centring clamping slides (2) being radially or tangentially disposed for movement in opposite directions on the front end of said gudgeon (1) and with the movement being transmitted from said gudgeon to said centring clamping slides (2) through link studs (3, 4) engaging in grooves (12), and wherein two driving pistons (5) operative in alternation and disposed one beside the other plunge into the space defined by the length of said gudgeon and by the maximum diameter of said gudgeon.

2. Centring clamping device according to claim 1, **characterized in**
- that flattened balls (9) are inserted in said two driving pistons, which bear against said gudgeon by their flattened portions within said recess (10) in said gudgeon.

3. Centring clamping device according to Claim 1 and 2, **characterized in**
- that said link studs (3, 4) are disposed in bores of said centring clamping slides (2) and engage, by flattened head portions, in grooves of said gudgeon.

4. Centring clamping device according to Claims 1 and 2, **characterized in**
- that said link studs (3, 4) are inserted into bores of said gudgeon (1) and engage, by flattened head portions, in grooves of said centring clamping slides (2).

5. Centring clamping device according to Claims 1 to 4, **characterized in**
- that two centring clamping slides (2, 13, 27) are provided in parallel arrangement so as to bear against each other, and having grooves which extend, relative to the central position, transversely with respect to the direction of movement of said centring clamping slides.

6. Centring clamping device according to Claims 1 to 4, **characterized in**
- that, relative to said gudgeon (1), said centring clamping slides (2, 13, 27) are radially arranged and that, relative to the central position, their grooves extend at an inclination from the direction of movement of said centring clamping slides.

7. Centring clamping device according to Claims 1 to 6, **characterized in**
- said gudgeon (1) is cross-spit in the area between said driving pistons (5, 17) and said centring clamping slides,
- that the two parts of said centring clamping slide are meshing with grooves, and that
- that part on which said centring clamping slide is provided is adapted to be displaced into a free space.

8. Centring clamping device according to the Claims 1 to 7, **characterized in**
- that a disconnecting device is provided in the form of a bar inserted into the housing, which serves to guide said centring clamping slides in grooves and is supported for easy tilting about its longitudinal axis, and which clamps said centring clamping slides with said housing in a direction toward said gudgeon when said pistons are pressurized.

## Revendications

1. Dispositif de serrage à centrage, équipé des mâchoires de serrage centrables (2) pour serrer des pièces à usiner, dans lequel lesdites mâchoires de serrage sont mobiles en mouvements opposés moyennant un pivot (1) auquel est appliquée une force par un piston (3, 4) actionné au moyen d'un milieu, et dans lequel ledit pivot (1) est prévu des chevilles logées dans lesdites mâchoires de serrage (2), les pivot (1) étant équipé d'un évidement (10) périphérique dans lequel s'engrènent des pistons d'actionnement (5) à action tangentielle de façon à créer un mouvement rotatif alternant dudit pivot (1) et à loger ledit pivot (1) dans la zone entre le point d'action (10) dudit piston d'actionnement et lesdites coulisses de serrage à centrage, pendant qu'un deuxième logement est prévu sous forme d'un tenon sur l'extrémité opposée auxdites coulisses de serrage à centrage (2), deux ou plus de deux coulisses de serrage à centrage (2) étant disposées en arrangement radial ou tangentiel pour un mouvement en sens opposées sur la face dudit pivot (1) et le mouvement étant transmis dudit pivot auxdites coulisses de serrage à centrage (2) par des goujons à coulisse (3, 4) engagés dans des rainures (12), et dans lequel deux pistons d'actionnement (5), à action alternante et disposés l'un à côté de l'autre, s'enfoncent dans l'espace défini par la longueur dudit pivot et par le diamètre dudit pivot.

2. Dispositif de serrage à centrage selon la revendication 1, **caractérisé en ce**
- que des billes (9) sont introduites dans lesdits deux pistons d'actionnement qui butent contre ledit pivot par leurs parties aplaties à l'intérieur dudit évidement (10) dans ledit pivot.

3. Dispositif de serrage à centrage selon les revendications 1 et 2, **caractérisé en ce**
- que lesdits goujons à coulisse (3, 4) sont disposés dans des alésages desdites coulisses de serrage à centrage (2) et s'engagent, par des parties de tête aplaties, dans des rainures dudit pivot.

4. Dispositif de serrage à centrage selon les revendications 1 et 2, **caractérisé en ce**
- que lesdits goujons à coulisse (3, 4) sont introduits dans des alésages dudit pivot (1) et s'engagent, par des parties de tête aplaties, dans des rainures desdites coulisses de serrage à centrage (2).

5. Dispositif de serrage à centrage selon les revendications 1 à 4, **caractérisé en ce**
- que deux coulisses de serrage à centrage (2, 13, 27) sont disposées en arrangement parallèle de façon à buter l'une contre l'autre, et présentent des rainures qui s'étendent, relativement à la position centrale, transversalement au sens du mouvement desdites coulisses de serrage à centrage.

6. Dispositif de serrage à centrage selon les revendications 1 à 4, **caractérisé en ce**
- que, relativement audit pivot (1), lesdites coulisses de serrage à centrage (2, 13, 27) sont disposées radialement, et en ce que, relativement à la position centrale, leurs rainures s'étendent de biais relativement au sens du mouvement desdits coulisses de serrage à centrage.

7. Dispositif de serrage à centrage selon les revendications 1 à 6,, **caractérisé en ce**
- que ledit pivot (1) est divisé en travers dans la zone entre lesdits pistons d'actionnement (5, 17) et lesdites coulisses de serrage à centrage,
- que les deux parties de ladite coulisse de serrage à centrage s'engrènent dans des rainures, et en ce que
- l'élément sur lequel se trouve ladite coulisse de serrage à centrage est déplaçable dans un espace libre.

8. Dispositif de serrage à centrage selon les revendications 1 à 7, **caractérisé en ce**
- qu'un dispositif séparateur est prévu sous forme d'une barre insérée dans le boîtier, qui sert à guider lesdites coulisses de serrage à centrage dans des rainures et est logée à basculer facilement autour son axe longitudinal, et qui serre lesdites coulisses de serrage à centrage, ensemble avec ledit boîtier, en un sens vers ledit pivot quand lesdits pistons sont soumis à la pression.
